# EUROPEAN PATENT SPECIFICATION

(11) **EP 4 096 440 B1**
(45) Date of publication and mention of the grant of the patent: **03.04.2024**
(21) Application number: 21703013.9
(22) Date of filing: 01.02.2021
(51) Int. Cl.: A23L 33/115, A23L 33/00

(54) **NUTRITIONAL COMPOSITION FOR USE IN GUT MATURATION**
ERNÄHRUNGSZUSAMMENSETZUNG ZUR VERWENDUNG IN DER DARMREIFUNG
COMPOSITION NUTRITIONNELLE À UTILISER DANS LA MATURATION DE L'INTESTIN

(30) Priority: 31.01.2020 EP 20154806
(43) Date of publication of application: 07.12.2022
(73) Proprietor: N.V. Nutricia, 2712 HM Zoetermeer (NL)
(72) Inventor: MISCHKE, Mona, 3584 CT Utrecht (NL); RENES, Ingrid Brunhilde, 3584 CT Utrecht (NL); VAN SEUNINGEN, Isabelle, 59045 Lille cedex (FR); VINCENT, Audrey, 59045 Lille cedex (FR)
(74) Representative: Nederlandsch Octrooibureau
(86) International application number: PCT/EP2021/052322
(87) International publication number: WO 2021/152176

(56) References cited:
- WO-A1-2009/082216
- WO-A1-2011/115476
- WO-A1-2013/191533
- WO-A1-2014/160150
- WO-A1-2015/065193
- WO-A1-2017/064304
- WO-A1-2017/155898
- WO-A1-2017/215721
- WO-A2-2019/090273
- ZHOU A L ET AL: "Milk polar lipids modulate lipid metabolism, gut permeability, and systemic inflammation in high-fat-fed C57BL/6J ob/ob mice, a model of severe obesity", JOURNAL OF DAIRY SCIENCE, vol. 102, no. 6, 30 June 2019 (2019-06-30) , pages 4816-4831, XP085686908, ISSN: 0022-0302, DOI: 10.3168/JDS.2018-15949

## Description

### FIELD OF THE INVENTION

The invention is in the field of nutrition for infants, in particular infant formula.

### BACKGROUND OF THE INVENTION

Human breast milk is universally considered to be the optimal nutrition for infants during the first months of life. Breast milk likely plays several complementary roles in shaping the gut microbiota and the immune system of the infant. These include prebiotic actions, by which nutritional components of milk are selective for the growth of specific types of bacteria, as well as direct transfer of bacteria and immune components. However, in some cases breastfeeding is inadequate or unsuccessful for medical reasons or because of a choice not to breastfeed. For such situations infant or follow on formulas have been developed. Commercial infant formulas are commonly used nowadays to provide for a supplemental or sole source of nutrition early in life. These formulas comprise a range of nutrients to meet the nutritional needs of the growing infant, and typically include fat, carbohydrate, protein, vitamins, minerals, and other nutrients helpful for optimal infant growth and development. Commercial infant formulas are designed to mimic, as closely as possible, the composition and function of human milk.

The gut of a new-born is functionally immature and immuno-naive at birth. The gastrointestinal (GI) tract experiences rapid growth and maturation following birth wherein the adequate digestive function develops, a functional gut barrier is established, a gut microbiota develops and the immune functionality develops. This means that during the first weeks of life all mammals have an immature intestine.

Early life nutrition is known to affect the developmental trajectory of an infant, including the development of the gut, directly by providing building blocks, but also by regulating signalling pathways via molecular mechanisms (Jimenez-Chillaron JC et al. 2012, Biochemie 94: 2242 - 2263). Compared to mother's milk, formula concepts have been shown to change the timing and outcome of gut maturation in clinical and preclinical studies (Catassi C et al. 1995, J Pediatr Gastroenterol Nutr 21 (4): 383-386).

WO2013/191533 discloses infant formulas comprising PL-coated lipid globules comparable to those presently claimed, for improving body composition.

There is a need in the art to modulate gut maturation and concomitantly the immune maturation of the gut of formula-fed infants to achieve / support an adequate timing and outcome, the failure of which may result in the onset of autoimmune or atopic diseases.

### SUMMARY OF THE INVENTION

The present invention aims to provide in the need in the art for infant formulas to be used for modulating gut maturation and improving the gut immune system of formula-fed infants to a gut maturation pattern more similar to human milk fed infants.

The inventors compared the postnatal gene expression patterns of three groups of healthy mice that were randomized to one group receiving breastfeeding (mother-fed), one group receiving an experimental infant formula comprising a lipid component in the form of large lipid globules coated with phospholipids (Active), and one group receiving a control infant formula without a lipid component in the form of large lipid globules coated with phospholipids, but in the form of standard small lipid globules coated with protein (Control). Both formulas were administered from day 14.5 until day 18.5 after birth. The control and experimental milk formula were prepared to achieve the same protein content in both preparations with very similar fat and carbohydrate content, as well as caloric content.

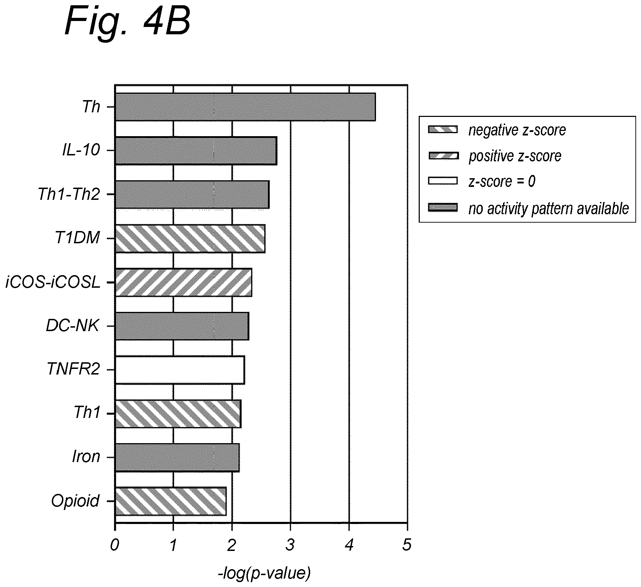

The inventors surprisingly found, when analysing the gene expression in the small intestine of the different diet groups, that the gene expression of the mice fed the experimental infant formula was more similar to the gene expression of the mother-fed mice than the gene expression of the control formula-fed mice. The mice fed the experimental infant formula had gene expression of individual genes implicated in regulation of epithelial barrier function and epithelial defence as part of the immune response (including Regenerating Islet-derived 3 beta (Reg3b), Regenerating islet derived 3g (Reg3g), Protein Tyrosine Kinase 6 (Ptk6), TRAF Interacting Protein with Forkhead Associated Domain (Tifa)) that was more similar to the mother-fed mice. In addition, the mice fed the experimental infant formula had gene expression patterns of functional gene sets (canonical pathways) involved in immune signalling and cell cycle signalling (Figure 4B) less different from, hence more similar to, the mother-fed group, compared to the control group.

Overall, these findings indicate that feeding an infant formula with a similar caloric content and macro-ingredient content but having a different architecture of lipid globules has a beneficial effect on the postnatal gut maturation and gut immune system early in life, rendering it advantageously more similar to the timing and outcome of gut maturation of human milk fed infants compared to the timing and outcome of gut maturation in infants that received the control formula.

### DESCRIPTION OF THE FIGURES

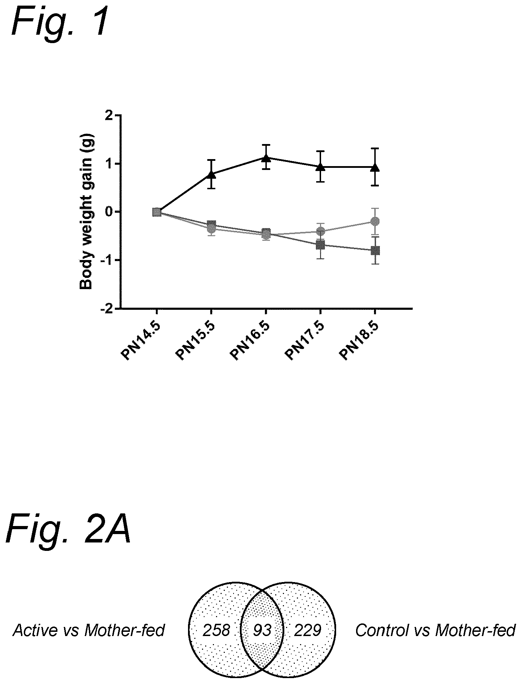

Figure 1 shows the body weight gain in grams from post-natal day 14.5 onwards of mice that were either mother-fed (black triangles) or exposed to an active (light-grey circles) or control (dark-grey squares) composition. Shown are mean ± SEM. 2-way ANOVA followed by Tukey's multiple comparison test.
Figure 2A shows gene set intersections and differences for the different dietary conditions resulting from comparison of differentially expressed genes after FDR correction (q≤0.05) for Active versus mother-fed (n=351) and Control versus mother-fed (n=322) using a Venn diagram.

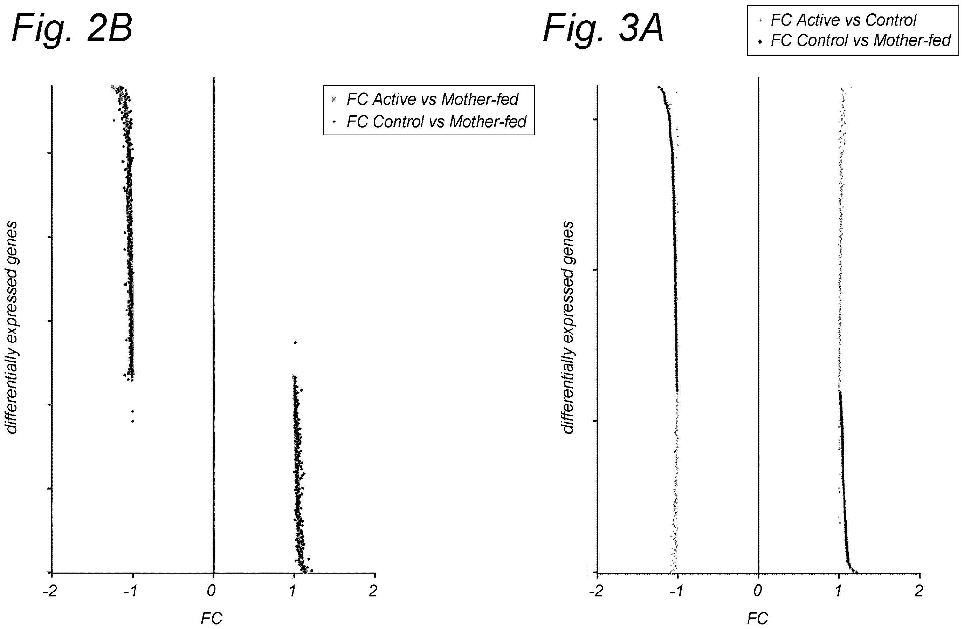

Figure 2B shows a fold-change (FC) plot of differentially expressed genes (q≤0.05) in Active vs mother-fed (light-grey) and Control vs mother-fed (black) (in total n=580) indicating directionality and load of change of genes in the different group comparisons
Figure 3A shows a FC plot of differentially expressed genes (q≤0.05) in Control vs mother-fed (n=322) indicating directionality and load of change of genes in group comparisons Control vs mother-fed and Active vs Control. In light grey the FC of differentially expressed genes of Active versus Control is shown, in black the FC of Control versus mother-fed is shown.

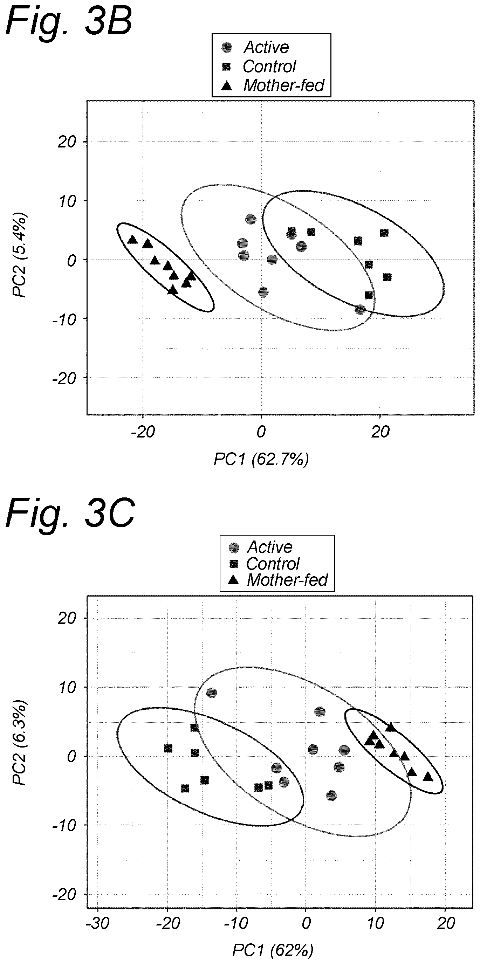

Figure 3B shows PCA of genes that are differentially expressed for Control vs mother-fed (n=322) for all 3 groups; mother-fed (black triangle), Active (light-grey circle), Control (dark-grey square). Unit variance scaling is applied to rows; SVD with imputation is used to calculate principal components. X and Y axis show principal component 1 and principal component 2 that explain 62.7% and 5.4% of the total variance, respectively. Prediction ellipses are such that with probability 0.95, a new observation from the same group will fall inside the ellipse. N = 23 data points.
Figure 3C shows PCA of genes that are differentially expressed in Control vs mother-fed only (n=229) excluding overlap for all 3 groups; mother-fed (black triangle), Active (light-grey circle), Control (dark-grey square). Unit variance scaling is applied to rows; SVD with imputation is used to calculate principal components. X and Y axis show principal component 1 and principal component 2 that explain 62% and 6.3% of the total variance, respectively. Prediction ellipses are such that with probability 0.95, a new observation from the same group will fall inside the ellipse. N = 23 data points.

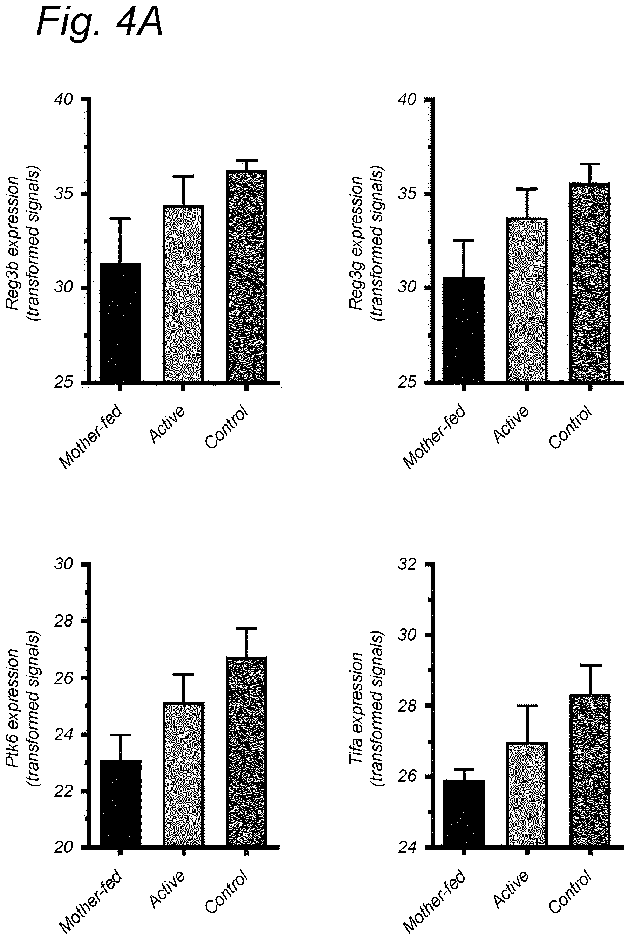

Figure 4A shows the gene expression of individual genes that are among others implicated in regulation of epithelial barrier function and epithelial defence as part of the immune response (incl. Reg3b, Reg3g, Ptk6, Tifa), which are affected by Control (dark-grey bars) compared to mother-fed (black bars), but not by Active (light-grey bars).
Figure 4B shows the top 10 significantly regulated canonical pathways for Control vs mother-fed using the n=322 differentially expressed genes. The following top 10 regulated canonical pathways for Control versus mother-fed are shown: Th: T helper Cell Differentiation, IL-10: IL-10 signalling, Th1-Th2: Th1 and Th2 Activation Pathway, T1DM: Type I Diabetes Mellitus Signalling, iCOS-iCOSL: iCOS-iCOSL Signalling in T Helper Cells, DC-NK: Crosstalk between Dendritic Cells and Natural Killer cells, TNFR2: TNFR2 signalling, Th1: Th1 Pathway, Iron: Iron homeostasis signalling pathway, Opioid: opioid Signalling Pathway.

### DETAILED DESCRIPTION OF THE INVENTION

Thus, the present invention concerns a method for modulating timing and outcome of gut maturation in an infant which is more similar to the timing and outcome of gut maturation observed in human milk fed infants compared to the timing and outcome of gut maturation in an infant that was administered a control infant formula or follow on formula comprising lipid globules with a mode diameter based on volume of about 0.5 µm and that do not have a coating of phospholipids, said method comprising feeding said infant a nutritional composition selected from an infant formula and a follow on formula, wherein the infant formula or follow on formula is not human milk and wherein said infant formula or follow on formula comprises lipid, protein and digestible carbohydrates, wherein the lipid is in the form of lipid globules, and wherein,
a. the lipid globules have a mode diameter based on volume of at least 1 µm, and/or
b. at least 45 vol.% of the lipid globules have a diameter of 2 to 12 µm, and
c. the lipid comprises at least 0.5 wt.% phospholipids based on total lipid,
and the lipid globules have a coating comprising phospholipid.

The invention can also be worded as concerning a non-therapeutic method for modulating timing and outcome of gut maturation in an infant by administering a nutritional composition selected from an infant formula and a follow on formula, wherein the infant formula or follow on formula is not human milk and wherein said infant formula or follow on formula comprises lipid, protein and digestible carbohydrates, wherein the lipid is in the form of lipid globules, and wherein,
a. the lipid globules have a mode diameter based on volume of at least 1 µm, and/or
b. at least 45 vol.% of the lipid globules have a diameter of 2 to 12 µm, and
c. the lipid comprises at least 0.5 wt.% phospholipids based on total lipid and the lipid globules have a coating comprising phospholipid,
wherein the timing and outcome of gut maturation in the infant is more similar to the timing and outcome of gut maturation observed in human milk fed infants compared to the timing and outcome of gut maturation in an infant that was administered a control infant formula or follow on formula comprising lipid globules with a mode diameter based on volume of about 0.5 µm and that do not have a coating of phospholipids.

In other words, the present invention concerns a nutritional composition selected from an infant formula and a follow on formula, wherein the infant formula or follow on formula is not human milk and wherein said infant formula or follow on formula comprises carbohydrates, protein and lipid, wherein the lipid is in the form of lipid globules, and wherein,
a. the lipid globules have a mode diameter based on volume of at least 1 µm, and/or
b. at least 45 vol.% of the lipid globules have a diameter of 2 to 12 µm, and
c. the lipid comprises at least 0.5 wt.% phospholipids based on total lipid,

and the lipid globules have a coating comprising phospholipid,
for use in modulating timing and outcome of gut maturation in an infant which is more similar to the timing and outcome of gut maturation observed in human milk fed infants compared to the timing and outcome of gut maturation in an infant that was administered a control infant formula or follow on formula comprising lipid globules with a mode diameter based on volume of about 0.5 µm and that do not have a coating of phospholipids.

The invention can also be worded as the use of lipid globules in the manufacture of a nutritional composition for use in modulating timing and outcome of gut maturation in an infant which is more similar to the timing and outcome of gut maturation observed in human milk fed infants compared to the timing and outcome of gut maturation in an infant that was administered a control infant formula or follow-on formula comprising lipid globules with a mode diameter based on volume of about 0.5 µm and that do not have a coating of phospholipids,
wherein the nutritional composition is selected from an infant formula and a follow on formula, wherein the infant formula or follow on formula is not human milk, and said infant formula or follow on formula comprises carbohydrates, protein and lipid, wherein the lipid is in the form of lipid globules, and wherein,
   a. the lipid globules have a mode diameter based on volume of at least 1 µm, and/or
   b. at least 45 vol.% of the lipid globules have a diameter of 2 to 12 µm, and
   c. the lipid comprises at least 0.5 wt.% phospholipids based on total lipid,
and the lipid globules have a coating comprising phospholipid.

The term "human milk fed infants" as used herein refers to infants who from birth until at least 4 months old have solely consumed human breast milk, either from the breast directly or from a bottle comprising expressed breast milk.

The term "control infant formula and or follow on formula" as used herein refers to infant formula or follow on formula which:
- meet the legal requirements (e.g. EU regulations no. 609/2013 and no. 2016/127) for infant or follow on formulas;
- comprise lipid globules with a mode diameter based on volume of about 0.5 µm; and
- said lipid globules do not have a coating of phospholipids.

In a preferred embodiment of the invention, the timing and outcome of gut maturation in the first 12 months of life of the infant, more preferably in the first 6 months of life of the infant is more similar to the timing and outcome of the gut maturation observed in the same period of life in human milk fed infants.

In a preferred embodiment of the invention the nutritional composition is administered to an infant, wherein the infant that is administered the nutritional composition has an age of 0 to 12 months, preferably 0 to 6 months, more preferably 0 to 4 months.

In a preferred embodiment of the invention, the timing and outcome of gut maturation of an infant is the timing and outcome of gut maturation in the first 12 months of life of the infant.

In the context of the present invention an infant preferably is a term born infant. Preferably the nutritional composition is administered to or is used in a term infant. A term infant means an infant born at a gestational age of 37 to 42 weeks. Preferably the nutritional composition is administered to or is used in a healthy infant.

In the context of the present invention modulating the timing and outcome of gut maturation in an infant preferably includes the modulation of timing and outcome of epithelial barrier function and epithelial defence as part of the gut immune response more similar to the epithelial barrier function and epithelial defence as part of the gut immune response as observed in human milk fed infants.

In the context of the present invention modulating the timing and outcome of gut maturation preferably includes the modulation of the gut immune status and/or function more similar to the gut immune status and/or function observed in human milk fed infants. In other words, in one embodiment, modulating the timing and outcome of gut maturation is modulating the timing and outcome of gut immune system maturation, preferably modulating the timing of gut immune system maturation.

In the context of the present invention, modulating the timing and outcome of the gut immune system maturation preferably includes the induction of a tolerogenic immune status to stimulate food tolerance.

A gut immune system maturation preferably includes modulating expression of genes involved in regulation of epithelial barrier function and epithelial defence as part of the gut immune response (including but not limited to the human genes Reg3b, Reg3g, Ptk6, Tifa) and/or of canonical pathways involved in gut immune signalling, in a manner more similar to human milk fed infants as compared to infants that are fed a control (or standard) formula comprising lipid globules of about 0.5 µm and that do not have a coating of phospholipids.

The canonical pathways involved in gut immune signalling include, but are not limited to, the pathways implicated in the following biological functions: T helper cell (Th) differentiation, interleukin-10 (IL-10) signalling, Th1 and Th2 activation pathways, iCOS-iCOS ligand signalling in Th cells, crosstalk between dendritic cells and natural killer cells, tumour necrosis factor receptor 2 (TNFR-2) signalling, Th1 pathway and the iron homeostasis signalling pathway. The canonical pathways involved in gut immune signalling more similar to human milk fed infants are significantly differently regulated canonical pathways. Genes related to gut immune signalling that are in particular regulated or expressed more like the pattern observed in human milk fed infants are the following genes: Bone Morphogenic Protein Receptor type 1A (BMPR1A), BRAF, Calcium/Calmodulin Dependent Protein Kinase II Delta (CAMK2D), HCK, Histone Deacetylase 9 (HDAC9), Human Leukocyte Antigen A (HLA-A), HLA-DQB1, Inhibitor of DNA binding 4 (ID4), Interferon Gamma Receptor 1 (IFNGR1), Interleukin-18 (IL18), Interleukin-2 Receptor 2B (IL2RB), Interleukin 4 Receptor (IL4R), Mitogen-Activated Protein Kinase Kinase 3 (MAP2K3), Nuclear Factor Of Kappa Light Polypeptide Gene Enhancer In B-Cells Inhibitor Alpha (NFKBIA), Protein Tyrosine Phosphatase Non-Receptor Type 22 (PTPN22), Mothers Against Decapentaplegic homolog 4 (SMAD4), Sphingosine Kinase 1 (SPHK1), Signal Transducer and Activator of Transcription 3 (STAT3), TRAF Family Member Associated NFKB Activator (TANK), TRAF Interacting Protein With Forkhead Associated Domain (TIFA), TNF Receptor Superfamily Member 1A (TNFRSF1A) and VAV1.

In the context of the invention modulating the timing and outcome of gut maturation preferably includes modulating expression of genes involved in immune development, immune function, immune activation and immune signalling.

### Lipid globule size

According to the present invention, the nutritional composition comprises lipid globules. When in liquid form these lipid globules are emulsified in the aqueous phase. Alternatively the lipid globules are present in a powder and the powder is suitable for reconstitution with water or another food grade aqueous phase, preferably to provide a ready to drink formula.

The lipid globules comprise a core and a surface. The core preferably comprises vegetable fat and preferably comprises at least 90 wt.% triglycerides and more preferably essentially consists of triglycerides. Not all vegetable lipids that are present in the composition need necessarily be comprised in the core of lipid globules, but preferably a major part is, preferably more than 50% wt.%, more preferably more than 70 wt.%, even more preferably more than 85 wt.%, even more preferably more than 95 wt.%, most preferably more than 98 wt.% of the vegetable lipids that are present in the composition are comprised in the core of lipid globules. In one embodiment the core of the lipid globules comprises at least 40 wt.% triglycerides of vegetable origin, more preferably at least 50 wt.%, even more preferably at least 70 wt.% triglycerides of vegetable origin, more preferably the core of the lipid globules comprises at least 85 wt.%, more preferably at least 95 wt.% triglycerides of vegetable origin.

The lipid globules in the nutritional composition in the method or use of the present invention have a volume-weighted mode diameter above 1.0 µm, preferably above 3.0 µm, more preferably 4.0 µm or above, preferably between 1.0 and 10 µm, more preferably between 2.0 and 8.0 µm, even more preferably between 3.0 and 8.0 µm, most preferably between 4.0 µm and 8.0 µm. Preferably in addition or alternatively the size distribution is in such a way that at least 45 volume %, preferably at least 55 volume %, even more preferably at least 65 volume %, even more preferably at least 75 volume % has a diameter between 2 and 12 µm. More preferably at least 45 volume %, preferably at least 55 volume %, even more preferably at least 65 volume %, even more preferably at least 75 volume % has a diameter between 2 and 10 µm. Even more preferably at least 45 volume %, preferably at least 55 volume %, even more preferably at least 65 volume %, even more preferably at least 75 volume % has a diameter between 4 and 10 µm. Preferably less than 5 volume % has a diameter above 12 µm.

The percentage of lipid globules is based on volume of total lipid. The mode diameter relates to the diameter which is the most present based on volume of total lipid, or the peak value in a graphic representation, having on the X-as the diameter and on the Y-as the volume (%).

The volume of the lipid globule and its size distribution can suitably be determined using a particle size analyser such as a Mastersizer (Malvern Instruments, Malvern, UK), for example by the method described in Michalski et al, 2001, Lait 81: 787-796.

### Phospholipids

The nutritional composition to be administered in the method or use according to the present invention comprises phospholipids, more preferably the nutritional composition comprises phospholipids derived from non-human animal origin, most preferably the nutritional composition comprises phospholipids derived from non-human mammalian milk. Phospholipids derived from non-human mammalian milk include phospholipids isolated from milk lipid, cream lipid, cream serum lipid, butter serum lipid, beta serum lipid, whey lipid, cheese lipid and/or buttermilk lipid. The buttermilk lipid is typically obtained during the manufacture of buttermilk. The butter serum lipid or beta serum lipid is typically obtained during the manufacture of anhydrous milk fat from cream or butter. Preferably the phospholipids are obtained from milk cream. The phospholipids are preferably derived from milk of cows, mares, sheep, goats, buffalos, horses and camels, most preferably from cow's milk. It is most preferred to use a lipid extract isolated from cow's milk. A suitable source of phospholipids derived from non-human mammalian milk is the fraction that can be isolated from milk called milk fat globule membrane (MFGM). Hence in one embodiment, the phospholipids to be used in the nutritional composition in the method or use according to the present invention are provided as MFGM. Suitable commercially available sources for milk phospholipids lipids are BAEF, SM2, SM3 and SM4 powder of Corman, Salibra of Glanbia, and LacProdan MFGM-10 or PL20 from Aria.

The nutritional composition comprises at least 0.5 wt.% phospholipids based on total lipid, preferably 0.5 to 20 wt.% phospholipids based on total lipid, more preferably 0.75 to 10 wt.%, more preferably 1 to 10 wt.%, even more preferably 1.5 to 10 wt.% even more preferably 2 to 8 wt.% phospholipids based on total lipid.

The lipid globules that are present in the nutritional composition for use according to the present invention are at least partly coated on the surface with phospholipids. By 'coating' is meant that the outer surface layer of the lipid globule comprises phospholipids, whereas these phospholipids are virtually absent in the core of the lipid globule. A suitable way to determine whether phospholipids are located on the surface of the lipid globules is laser scanning microscopy.

The presence of phospholipids as a coating or outer layer of the lipid globule in the diet administered was found to advantageously modulate gut maturation that is more similar to that of human milk fed infants. Not all phospholipids that are present in the composition need necessarily be comprised in the coating, but preferably a major part is. Preferably more than 30 wt.%, more preferably more than 50 wt.%, more preferably more than 70 wt.%, even more preferably more than 85 wt.%, most preferably more than 95 wt.% of the phospholipids that are present in the composition are comprised in the coating of lipid globules.

According to the present invention, the nutritional composition preferably comprises glycerophospholipids. Glycerophospholipids are a class of lipids formed from fatty acids esterified at the hydroxyl groups on carbon-1 and carbon-2 of the backbone glycerol moiety and a negatively-charged phosphate group attached to carbon-3 of the glycerol via an ester bond, and optionally a choline group (in case of phosphatidylcholine, PC), a serine group (in case of phosphatidylserine, PS), an ethanolamine group (in case of phosphatidylethanolamine, PE), an inositol group (in case of phosphatidylinositol, PI) or a glycerol group (in case of phosphatidylglycerol, PG) attached to the phosphate group. Lysophospholipids are a class of phospholipids with one fatty acyl chain. Preferably the present composition contains PC, PS, PI and/or PE, more preferably at least PC.

Preferably the nutritional composition comprises sphingomyelin. Sphingomyelins have a phosphorylcholine or phosphorylethanolamine molecule esterified to the 1-hydroxy group of a ceramide. They are classified as phospholipid as well as sphingolipid, but are not classified as a glycerophospholipid nor as a glycosphingolipid. Preferably the nutritional composition comprises 0.05 to 10 wt.% sphingomyelin based on total lipid, more preferably 0.1 to 5 wt.%, even more preferably 0.2 to 2 wt.%. Preferably the phospholipids comprise at least 2 wt.% sphingomyelin, more preferably 5-40 wt.% sphingomyelin and most preferably 10-30 wt.% sphingomyelin based on total phospholipids.

According to the present invention, the nutritional composition preferably comprises cholesterol. The nutritional composition preferably comprises at least 0.005 wt.% cholesterol based on total lipid, more preferably at least 0.01 wt.%, more preferably at least 0.02 wt.%, more preferably at least 0.05 wt.%., even more preferably at least 0.1 wt.%. Preferably the amount of cholesterol does not exceed 10 wt.% based on total lipid, more preferably does not exceed 5 wt.%, even more preferably does not exceed 1 wt.% of total lipid.

Preferably the weight ratio phospholipids to protein is above 0.10, more preferably above 0.20, even more preferably above 0.3.

The concomitant use of phospholipids derived from non-human animal origin and triglycerides derived from vegetable lipids enables to manufacture lipid globules with an architecture more similar to human milk, while at the same time providing an optimal fatty acid profile.

Methods for obtaining lipid globules with an increased size and coating with phospholipids are disclosed in WO 2010/0027258, WO 2010/0027259 and WO 2013/135738.

### Infant formula and follow on formula

The nutritional composition to be administered in the method or use according to the present invention is selected from an infant formula and a follow on formula. This means that the present nutrition composition is not human milk. Alternatively the term "formula" means that it concerns a composition that is artificially made or in other words that it is synthetic. Hence in one embodiment the nutritional composition is selected from an artificial infant formula and an artificial follow on formula or a synthetic infant formula and a synthetic follow on formula. In the present context, infant formula refers to nutritional compositions, artificially made, intended for infants of 0 to about 4 to 6 months of age and are intended as a substitute for human milk. Typically infant formulas are suitable to be used as sole source of nutrition. Such formulas are also known as starter formula. Formula for infants starting with at 4 to 6 months of life to 12 months of life are intended to be supplementary feedings to infants that start weaning on other foods. Such formulas are also known as follow on formulas. Infant formulae and follow-on formulae are subject to strict regulations, for example for the EU regulations no. 609/2013 and no. 2016/127. Such formulas preferably comprise other ingredients, such as minerals, trace elements, vitamins and other micronutrients as recommended and known in the art.

Preferably the nutritional composition is used at least during the first 2 months of life, preferably at least during the first 3 months of life of the infant, more preferably at least during the first 4 months of life of the infant. Preferably the nutritional composition is administered to an infant with an age below 12 months, preferably below 6 months, more preferably below 4 months of age.

The nutritional composition preferably comprises 3 to 7 g lipid/100 kcal, preferably 4 to 6 g lipid/100 kcal, more preferably 4.5 to 5.5 g lipid/100 kcal, preferably 1.2 to 5 g protein/100 kcal, preferably 1.4 to 4 g protein/100 kcal, more preferably 1.6 to 3 g protein/100 kcal, more preferably 1.8 to 2.5 g protein/100 kcal, and preferably 6 to 18 g digestible carbohydrate/100 kcal, preferably 8 to 16 g digestible carbohydrate/100 kcal, more preferably 10 to 15 g digestible carbohydrate/100 kcal.

In one embodiment, the nutritional composition is in the form of a powder suitable for making a ready to drink formula after reconstitution with an aqueous solution, preferably with water. Preferably, the nutritional composition is a powder to be reconstituted with water.

Preferably the infant formula or follow on formula, when ready to drink has an energy density of 60 kcal to 75 kcal/100 ml, more preferably 60 to 70 kcal/100 ml. This density ensures an optimal balance between hydration and caloric intake.

In the context of the present invention, the infant formula or follow on formula is not native cow's milk or human milk. In the context of the present invention also the control infant formula or follow-on formula is not native cow's milk or human milk.

### Lipid

Herein LA refers to linoleic acid and/or acyl chain (18:2 n6); ALA refers to α-linolenic acid and/or acyl chain (18:3 n3); PUFA refers to polyunsaturated fatty acids and/or acyl chains; MUFA refers to monounsaturated fatty acids and/or acyl chains; LC-PUFA refers to long chain polyunsaturated fatty acids and/or acyl chains comprising at least 20 carbon atoms in the fatty acyl chain and with 2 or more unsaturated bonds; DHA refers to docosahexaenoic acid and/or acyl chain (22:6, n3); EPA refers to eicosapentaenoic acid and/or acyl chain (20:5 n3); ARA refers to arachidonic acid and/or acyl chain (20:4 n6); DPA refers to docosapentaenoic acid and/or acyl chain (22:5 n3). Medium chain fatty acids (MCFAs) refer to fatty acids and/or acyl chains with a chain length of 6, 8 or 10 carbon atoms.

The lipid that is present in the nutritional composition according to the invention preferably comprises PUFAs, more preferably LC-PUFAs, as LC-PUFAs further improve the growth patterns and body composition during catch-up growth, as well as brain and retina development. The nutritional composition preferably comprises 5 to 35 wt.% PUFA, more preferably 10 - 30 wt.% PUFA, most preferably 15 - 20 wt.% PUFA, based on total lipid. It is also preferred that the present nutritional composition comprises MUFAs, preferably 10 to 80 wt.% MUFA, more preferably 20 - 70 wt.% MUFA, most preferably 35 - 55 wt.% MUFA, based on total lipid.

LA preferably is present in a sufficient amount in order to promote a healthy growth and development, yet in an amount as low as possible to prevent unwanted development. The nutritional composition therefore preferably comprises less than 20 wt.% LA based on total lipid, preferably 5 to 16 wt.%, more preferably 10 to 14.5 wt.%. Preferably, the nutritional composition comprises at least 5 wt.% LA based on total lipid. Per 100 kcal, the nutritional composition preferably comprises 350 - 1400 mg LA. Preferably, ALA is present in a sufficient amount to promote a healthy growth and development of the infant. The present composition therefore preferably comprises at least 1.0 wt.% ALA based on total lipid. Preferably the composition comprises at least 1.5 wt.% ALA based on total lipid, more preferably at least 2.0 wt.%. Preferably the composition comprises less than 12.5 wt.% ALA, more preferably less than 10.0 wt.%, most preferably less than 5.0 wt.%. The nutritional composition preferably comprises a weight ratio of LA/ALA from 2 to 20, more preferably from 3 to 16, more preferably from 4 to 14, more preferably from 5 to 12.

For a proper growth and development, the present composition preferably comprises at least 3 wt.% MCFA based on total lipid, more preferably at least 9 wt.%, even more preferably 15 wt.%. The present composition advantageously comprises less than 50 wt.% MCFA based on total lipid, more preferably less than 40 wt.%, even more preferably less than 25 wt.%.

According to the present invention, the nutritional composition preferably comprises LC-PUFA, more preferably n-3 LC-PUFA, since n-3 LC-PUFA promote gut maturation. More preferably, the nutritional composition comprises EPA, DPA and/or DHA, even more preferably DHA. Since a low concentration of DHA, DPA and/or EPA is already effective, the content of n-3 LC-PUFA in the nutritional composition, more preferably DHA, preferably does not exceed 15 wt.% of the total fatty acid content, preferably does not exceed 10 wt.%, even more preferably does not exceed 5 wt.%. Preferably the nutritional composition comprises at least 0.15 wt.%, preferably at least 0.35 wt.%, more preferably at least 0.75 wt.%, n-3 LC-PUFA, more preferably DHA, of the total fatty acid content. In one embodiment, the present composition comprises at least 0.15 wt.% n-3 LC-PUFA based on total fatty acids selected from the group consisting of DHA, EPA, and DPA, more preferably DHA.

As the group of n-6 fatty acids, especially arachidonic acid (ARA) and LA as its precursor, counteracts the group of n-3 fatty acids, especially DHA and EPA and ALA as their precursor, the nutritional composition comprises relatively low amounts of ARA. The n-6 LC-PUFA, more preferably ARA, content preferably does not exceed 5 wt.%, more preferably does not exceed 2.0 wt.%, more preferably does not exceed 0.75 wt.%, even more preferably does not exceed 0.5 wt.%, based on total fatty acids.

Preferably, the nutritional composition comprises at least one source of vegetable lipid selected from sunflower oil, rapeseed oil, coconut oil and palm oil. Furthermore, it is preferred that in addition to the vegetable lipid, at least one lipid source selected from fish oil (preferably tuna fish oil), single cell oil (such as algal, microbial oil and fungal oil), MCT oil and egg lipid is present. These sources of oil are suitable as LC-PUFA sources. Preferably as a source of n-3 LC-PUFA single cell oil, including algal oil and microbial oil, is used. In a preferred embodiment the nutritional composition comprises at least one lipid selected from the group consisting of sunflower oil, rapeseed oil, coconut oil, palm oil, MCT oil, egg lipid, soy lecithin, sunflower lecithin, milk fat, buttermilk fat, butter serum fat, fish oil, marine oil, algal oil, fungal oil and microbial oil.

### Protein

The nutritional composition comprises proteins, preferably in the amounts specified above. The source of the protein should be selected in such a way that the minimum requirements for essential amino acid content are met and satisfactory growth is ensured. Hence protein sources based on cows' milk proteins such as whey, casein and mixtures thereof and proteins based on soy, potato or pea are preferred. In case whey proteins are used, the protein source is preferably based on acid whey or sweet whey, whey protein isolate or mixtures thereof and may include α-lactalbumin and β-lactoglobulin. More preferably, the protein source is based on acid whey or sweet whey from which caseino-glyco-macropeptide (CGMP) has been removed. Preferably the composition comprises at least 3 wt.% casein based on dry weight. Preferably the casein is intact and/or non-hydrolyzed. For the present invention protein includes peptides and free amino acids.

### Digestible carbohydrates

The nutritional composition comprises digestible carbohydrate, preferably in the amounts specified above. Preferred digestible carbohydrate sources are lactose, glucose, sucrose, fructose, galactose, maltose, starch and maltodextrin. Lactose is the main digestible carbohydrate present in human milk. Lactose advantageously has a low glycemic index. The nutritional composition preferably comprises lactose. The nutritional composition preferably comprises digestible carbohydrate, wherein at least 35 wt.%, more preferably at least 50 wt.%, more preferably at least 75 wt.%, even more preferably at least 90 wt.%, most preferably at least 95 wt.% of the digestible carbohydrate is lactose. Based on dry weight the present composition preferably comprises at least 25 wt.% lactose, preferably at least 40 wt.%.

### Non digestible carbohydrates

In one embodiment the nutritional composition comprises non-digestible oligosaccharides. Preferably the nutritional composition comprises non-digestible oligosaccharides with a degree of polymerization (DP) between 2 and 250, more preferably 3 and 60.

Preferably the non-digestible oligosaccharides comprise fructo-oligosaccharides, inulin and/or galacto-oligosaccharides, more preferably galacto-oligosaccharides, most preferably transgalacto-oligosaccharides. In a preferred embodiment the non-digestible oligosaccharides comprise a mixture of transgalacto-oligosaccharides and fructo-oligosaccharides or inulin. Suitable non-digestible oligosaccharides are for example Vivinal^{®}GOS (FrieslandCampina DOMO), RaftilinHP^{®} or Raftilose^{®} (Orafti).

Preferably, the nutritional composition comprises of 80 mg to 2 g non-digestible oligosaccharides per 100 ml, more preferably 150 mg to 1.50 g, even more preferably 300 mg to 1 g per 100 ml. Based on dry weight, the nutritional composition preferably comprises 0.25 wt.% to 20 wt.%, more preferably 0.5 wt.% to 10 wt.%, even more preferably 1.5 wt.% to 7.5 wt.%.

In this document and in its claims, the verb "to comprise" and its conjugations is used in its nonlimiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

### EXAMPLES

### Example 1: Process for preparing an IMF with larger lipid globule size

An infant formula was prepared as described in example 1 of WO 2013/135738. In particular, an infant formula in the form of a powder was prepared comprising per kg final product about 4800 kcal, about 247 g lipid, about 540 g digestible carbohydrates, about 41 g non-digestible oligosaccharides and about 97 g protein. The composition was prepared using butter milk serum powder enriched in milk phospholipids, a vegetable oil blend (lipid), demineralised whey powder (protein), lactose, and non-digestible oligosaccharides. Also vitamins, minerals, trace elements as known in the art were used.

The amount of butter milk serum powder was such that 1.62 wt.% phospholipids based on total lipids were present in the final composition. An aqueous phase, comprising the butter milk powder, protein and digestible carbohydrates and the other ingredients, except the lipid and lipid soluble vitamins, was prepared as known in the art and heat treated to prevent bacterial contamination, namely by an Ultra High Temperature (UHT) treatment, as known in the art, after which an evaporation step was applied. The dry matter content of the aqueous phase was between 30 to 48 wt.% after the evaporation step. The mixture was heated to 50 °C.

A lipid phase was prepared as known in the art. The vegetable oil blend was also heated to 50 °C and added to the water phase in a w/w ratio of between 15 to 30 by injection and a centrifugal booster pump. The total solid content of the lipid and aqueous phase mixture was between 40 and 60 wt.%. Accordingly, the aqueous and lipid phase were fed into the inline mixer (Ystral Z80) comprising one mixing head. The rotor stator design of the inline mixer had 3 rows of teeth. The aqueous and lipid phase were mixed with a tip speed of 20 to 50 m/s (resulting in a shear rate from 50000 to 100000 s⁻¹) in order to emulsify the lipid phase into the aqueous phase and thereafter pumped with a positive displacement pump, a mono pump, with a pressure of about 8 bar to the heater.

The oil in water mixture was subsequently fed via the concentrate heater to the spray dryer, driven by the pump used downstream of the inline mixer.

The emulsion was atomized with a low shear atomization system employing a two-fluid nozzle of Schlick (0/2-0/5 series), wherein the pressure used for spray-drying was below 8 bar, and dried with the inlet temperature of the drying gas being 195 °C. The size of the lipid globules in the final powder, after reconstitution with water, was measured with a Mastersizer 2000 (Malvern Instruments, Malvern UK).

### Example 2. An early in life diet with large lipid globules and milk phospholipids improves gut maturation in mice.

An *in vivo* animal experiment was performed wherein the effect of an early in life diet with large lipid globules comprising a coating comprising phospholipids on small intestinal gene expression was assessed.

Mouse C57BL/6 pups were randomized to three different dietary treatment groups: At postnatal day 14.5 mice remained either mother-fed (n=8) or started oral feeding for a period of 4 days with either a formula (Active group, n=8) comprising phospholipid coated large lipid globules with a mode diameter, based on volume, of about 4 µm, and wherein the volume % of lipid globules with a mode diameter of between 2 and 12 µm was above 45 vol.% or a Control formula (Control, n=7) wherein the fat component was present in the form of protein coated lipid globules and the lipid globules had a mode diameter, based on volume smaller than about 0.5 µm, and the volume % of lipid globules with a mode between 2 and 12 µm was below 10 vol.%.

The pups were eating the diet themselves. The Active and Control formulas were provided to the mice in liquid form in a dish in the cage. The mice were weighted every day. The mother-fed pups gained significantly more body weight than the pups in the Active and the Control group over the treatment period. The pups that were fed the Active or the Control formula did not differ in their body weight gain during the first days, but on PN17.5 and PN18.5 pups fed the Active formula had a significantly increased body weight gain compared to Control, and hence showed a trend towards growth like the mother-fed mice (Figure 1).

At the age of 18.5 days the mice were sacrificed and the small intestine of the mice was harvested and stored at -80°C until use.

The formula composition of both the Active group and Control group was the same, except for the size of the lipid globules and the coating thereon. The formula compositions comprised fat, protein, digestible carbohydrates, non-digestible oligosaccharide, vitamins, trace elements and minerals in proportions as is known in the art for human infant formulas.

The composition of the Control and the Active composition were as listed in table 1.

**Table 1: Control and the Active composition**

| **Ingredient (g/100g powder)** | **Control** | **Active** |
|---|---|---|
| Fat | 24.53 | 23.87 |
| Phospholipids | 0.126 | 0.564 |
| Carbohydrate | 55.7 | 54.8 |
| Protein (N*6.25) | 9.46 | 9.44 |
| C18:2w6, Linoleic acid (LA) | 3.12 | 3.00 |
| C18:3w3, a-Linolenic acid (ALA) | 0.64 | 0.61 |
| C20:4w6, Arachidonic acid (AA) | 0.091 | 0.086 |
| C22:6w3, Docosahexaenoic acid (DHA) | 0.075 | 0.068 |
| Monounsaturated fatty acids (MUFA) | 9.57 | 9.14 |
| Saturated fatty acids (SFA) | 9.72 | 9.65 |
| Polyunsaturated fatty acids (PUFA) | 4.02 | 3.89 |

### RNA Isolation and Microarray Analysis

Total RNA was prepared using the RNeasy mini-kit (QIAGEN, Courtaboeuf, France) according to manufacturer's instructions, including the additional step of DNase treatment. Total RNA yield and quality were assessed on the Agilent 2100 bioanalyzer (Agilent Technologies, Massy, France). One colour whole Mouse (074809_D_F_20171030 slides) 60-mer oligonucleotides 8x60k microarrays (Agilent Technologies) were used to analyse gene expression. cRNA labelling, hybridisation and detection were carried out according to supplier's instructions (Agilent Technologies). For each microarray, Cyanine 3-labeled cRNA were synthesized with the low input QuickAmp labelling kit from 50ng of total RNA. RNA Spike-In were added to all tubes and used as positive controls of labelling and amplification steps. The labelled cRNA were purified and 600ng of each cRNA were then hybridized and washed following manufacturer's instructions. Microarrays were scanned on an Agilent G2505C scanner and data extracted using Agilent Feature Extraction Software^{©} (FE version 10.7.3.1).

Probes were annotated using annotations 074809_D_GeneList_SurePrint G3 Mouse v2 from Agilent, resulting in 45973 annotated features, including duplicate gene symbols. To achieve 1 feature per gene symbol, duplicates were removed by averaging the raw signal values by arithmetic mean over the different probes per gene symbol, resulting in 26850 unique genes. Using CLC workbench (QIAGEN Bioinformatics), quality control of the data was performed and data were normalised and transformed.

### Bioinformatic analysis

Using CLC Main Workbench Version 8.1, quantile-normalized and log2-transformed signal intensities of unique genes were averaged per group and statistical analysis was performed using one-way analysis of variance (ANOVA) over the three groups and when appropriate pairwise t-tests to identify differentially expressed genes for the different group comparisons Active vs Control, Active vs mother-fed and Control vs mother-fed and related significances of change (p-values). Corresponding fold changes (FCs) indicate how many times bigger the mean expression value of one group is relative to that of another group. To control for false positive results, p-values were corrected for false discovery rate (FDR) using the method of Benjamini and Hochberg (Benjamini and Hochberg 1995), resulting in q-values (p-values corrected for FDR). It is expected that 5 % of the FDR corrected features with q-values below 0.05 are false positive. Quantile-normalized and log2-transformed signal intensities, FCs and q-values were applied for descriptive bioinformatic analysis of the data, using the tools Venn diagram to identify gene set intersections and differences for differentially expressed gene sets of different group comparisons, GraphPad Prism version 7.03 for Windows (GraphPad Software, La Jolla California USA) for FC plots, and ClustVis (Metsalu and Vilo 2015) for Principal Component Analysis (PCA). Ingenuity Pathway Analysis (IPA, Ingenuity Systems, www.ingenuity.com) and NCBI Gene data base (https://www.ncbi.nlm.nih.gov/gene) were used to relate the microarray data to canonical pathways and biological functions.

Of all unique, annotated genes from the dataset (n=26849) there was a total of 1127 significantly differentially expressed genes (p≤0.05) between the Active-fed versus the Control-fed pups, 4509 significantly differentially expressed genes (p≤0.05) between the Active-fed versus the mother-fed groups and 5417 significantly differentially expressed genes (p≤0.05) between the Control versus the mother-fed groups (Table 2). After correction for FDR, it is apparent that there are similar numbers of differentially expressed genes (q≤0.05) in the small intestine of Active vs mother-fed (n=351) and Control-fed vs mother-fed (n=322). The FC range in turn shows how much the expression level changed between two compared groups, here showing that overall the effect on small intestinal gene expression is relatively small.

**Table 2: Overview of the numbers of differentially expressed genes.**

| All unique annotated genes (n=26849) | FC range | p-value ≤0.05 | q-value* ≤0.05 |
|---|---|---|---|
| Active vs Control | -1.12 to +1.16 | 1127 | 0 |
| Active vs mother-fed | -1.26 to +1.19 | 4509 | 351 |
| Control vs mother-fed | -1.23 to +1.22 | 5417 | 322 |

| | | | |
|---|---|---|---|
| * q-value=p-value after FDR correction | | | |

Overall the microarray data shows that the small intestinal gene expression in the Active-fed group is closer to the mother-fed group for gene sets differentially expressed in the Control-fed versus mother-fed groups, wherein the effect can particularly be attributed to immune function and proliferation.

### Overlap of differentially expressed genes

Gene set intersections and differences for the different dietary conditions resulting from comparison of differentially expressed genes after FDR correction (q≤0.05) for Active versus mother-fed (n=351) and Control versus mother-fed (n=322) were identified by Venn diagram (Figure 2A). The Venn diagram illustrates that there are 93 genes overlapping reflective for the significant effect of formula feeding (both Control and Active) versus breast feeding.

To verify whether gene expression changes followed the same directionality, the fold expression changes of all differentially expressed genes (q≤0.05) in small intestine for Active versus mother-fed and Control versus mother-fed were plotted against each other (Figure 2B). The majority of the cumulated differentially expressed genes (n=580) showed similar directionality of change in both comparisons, while only 6 genes had opposite directionality of change: transferrin receptor 2 (Trf2), charged multivesicular body protein 4B (Chmp4b), protein phosphatase 2 regulatory subunit B" gamma (Ppp2r3c), 9330133O14Rik and A730063M14Rik coding for RIKEN, membrane protein palmitoylated 7 (Mpp7) and ubiquitin recognition factor in ER-associated degradation 1 (Ufd1).

When further analysing the effect of Active in the 322 genes differentially expressed in the Control pups compared to mother-fed pups, there are 25 genes having the same directionality of change for Active vs Control and 297 genes having the opposite directionality as for Control vs mother-fed (Figure 3A). Overall this indicates the gene expression pattern of the Active-fed group is closer to mother-fed for this gene set, as is also displayed in the heatmap of mean expression values in the 3 different groups for the 322 genes (not shown). Principal coordinates analysis (PCA) on the 322 genes differentially expressed in Control vs mother-fed shows that the 3 groups are largely separated along principal component (PC) 1, with mother-fed and Control clustering apart from each other and Active lying in between towards the mother-fed group, visualising that Active formula affects the expression of the genes that are differentially expressed between the Control and mother-fed groups towards a more similar expression as seen in mother-fed group (Figure 3B). PCA analysis of only the n=229 genes that are specifically differentially expressed in Control vs mother-fed only (without the n=93 overlapping with Active vs mother-fed) shows similar separation and clustering, with the Active group being even closer to the cluster of the mother-fed group (Figure 3C). The latter finding of the Active-fed group clustering closer to the mother-fed group is not biased by the selection of the genes; when the PCA analysis is performed for the n=351 genes that are differentially expressed in Active vs mother-fed, the Control group does not cluster closer to the mother-fed group (data not shown).

To gain insights into functional implications of observed gene expression patterns in the different groups, we first considered the individual genes that were significantly differentially expressed in Control compared to mother-fed (q≤0.05), but not in Active vs. mother-fed (q≥0.05), and which were oppositely regulated in Active vs. Control than in Control vs. mother-fed, and ranked them by inter-quartile range representing the variability of gene expression over the three groups. Among the top 20 ranked genes compliant with these criteria were genes implicated in regulation of epithelial barrier function and epithelial defence as part of the immune response, incl. Reg3b (top 2), Reg3g (top4), Ptk6 (top 9) and Tifa (top 20) , q-values of control compared to mother-fed were for Reg3b q=0.025, Reg3g q=0.017, Ptk6 q=0.007 and Tifa q=0.005 respectively (Figure 4A).

Apart from individual genes, we also considered functional groups of genes, as it is commonly accepted that quite small effects for various individual genes that are indicated in the same functional groups can have biological relevance. To investigate in which canonical pathways and biological functions the n=322 differentially expressed genes of Control vs mother-fed are implied, and how these pathways and functions are affected by feeding Active formula, we performed Ingenuity Pathway Analysis (IPA). In IPA, the significance of regulation of a canonical pathway is indicated by -log(p-values), which are calculated based on the number of regulated genes in relation to the total number of genes attributed to the pathway - thereby, a -log(p-value) of ~1.3 relates to a p-value of 0.05 - and activity patterns are indicated as z-scores, if adequate information is available (positive z-score=up-regulated, negative z-score=down-regulated). With IPA, 43 significantly regulated canonical pathways with a -log(p-value) >1.3 were found, the top 10 pathways thereof being mainly involved in immune signalling (T Helper Cell Differentiation, IL-10 Signalling, Th1 and Th2 Activation Pathway, Type I Diabetes Mellitus Signalling, iCOS-iCOSL Signalling in T Helper Cells, Crosstalk between Dendritic Cells and Natural Killer Cells, Th1 Pathway) and cell cycle and survival signalling (TNFR2 Signalling, Opioid Signalling Pathway) (Figure 4B). The 43 regulated pathways were driven by 46 genes. Using Gene Ontology Biological Processes descriptions, we found that 18 (Bcl2l1, Bmpr1a, Braf, Hck, Hdac9, Id4, Il18, Il2rb, Map2k3, Nfkbia, Ptpn22, Smad4, Sphk1, Stat3, Tank, Tifa, Tnfrsf1b, Vav1) of the 49 genes included one or more of the following terms: inflamma (n=6) and/or immune (n=6) and/or T cell (n=8) and/or cytokine (n=4) and/or NF-kappa (n=5). Visualizing the mean group expressions of the 46 genes indicated in the regulated pathways in a heatmap (Figure 3B), it was found also here that the Active group is less different from the mother-fed group, while mother-fed and Control are really distinct from each other. Overall the data shows that the Active formula provides for a gene expression pattern more similar to that observed in the mother-fed group, in particular with regard to the immune function of the gut, which, considering the pre-weaning setting of the study, implicates effects in gut and immune maturation.

## Claims

1. A non-therapeutic method for modulating timing and outcome of gut maturation in an infant by administering a nutritional composition selected from an infant formula and a follow on formula, wherein the infant formula or follow on formula is not human milk, said infant formula or follow on formula comprising lipid, protein and digestible carbohydrates, wherein the lipid is in the form of lipid globules, and
a. the lipid globules have a mode diameter based on volume of at least 1 µm, and/or
b. at least 45 vol.% of the lipid globules have a diameter of 2 to 12 µm, and
c. the lipid comprises at least 0.5 wt.% phospholipids based on total lipid and the lipid globules have a coating comprising phospholipid,
wherein the timing and outcome of gut maturation in the infant is more similar to the timing and outcome of gut maturation observed in human milk fed infants compared to the timing and outcome of gut maturation in an infant that was administered a control infant formula or follow on formula comprising lipid globules with a mode diameter based on volume of about 0.5 µm and that do not have a coating of phospholipids.

2. The non-therapeutic method according to claim 1, wherein the infant that is administered the nutritional composition has an age of 0 to 12 months, preferably 0 to 6 months, more preferably 0 to 4 months.

3. The non-therapeutic method according to claim 1 or 2, wherein the infant is a term infant.

4. The non-therapeutic method according to any one of the preceding claims, wherein modulating timing and outcome of gut maturation includes the modulation of the timing and outcome of the gut immune system maturation.

5. The non-therapeutic method according to claim 4, wherein modulation of the timing and outcome of the gut immune system maturation includes modulating expression of genes involved in regulation of epithelial barrier function and epithelial defence as part of the gut immune response more similar to human milk fed infants.

6. The non-therapeutic method according to any one of the preceding claims, wherein modulation of the timing and outcome of gut maturation includes regulating expression of genes involved in immune development, immune function, immune activation and/or immune signalling.

7. The non-therapeutic method according to claim 6, wherein the genes involved in immune development, immune function, immune activation and/or immune signalling are relevant individual genes and / or genes in significantly differently regulated canonical pathways.

8. The non-therapeutic method according to any one of the preceding claims, wherein the lipid comprises 0.5 wt.% - 20 wt.% phospholipids based on total lipid.

9. The non-therapeutic method according to any one of the preceding claims, wherein the infant formula or follow on formula comprises 0.25 to 20 wt.% non-digestible oligosaccharides based on dry weight of the formula.

10. The non-therapeutic method according to claim 9, wherein the non-digestible oligosaccharides comprise galacto-oligosaccharides and/or fructo-oligosaccharides.

11. The non-therapeutic method according to any one of the preceding claims, wherein the infant formula or follow on formula is a powder, suitable to reconstitute with water to provide a ready to drink formula.

12. The non-therapeutic method according to any one of the preceding claims, wherein the lipid comprises at least 0.15 wt.% docosahexaenoic acid based on total fatty acids.

13. The non-therapeutic method according to any one of the preceding claims wherein the infant formula or follow on formula comprises 1.2-5 g protein/100 kcal, 3-7 lipid/100 kcal, 6-18 digestible carbohydrates/100 kcal.

## Patentansprüche

1. Nicht-therapeutisches Verfahren zur Modulation des Zeitpunkts und des Ergebnisses der Darmreifung bei einem Säugling durch Verabreichung einer Nährstoffzusammensetzung, ausgewählt aus einer Säuglingsanfangsnahrung und einer -folgenahrung, wobei die Säuglingsanfangsnahrung oder -folgenahrung keine menschliche Milch ist, wobei die Säuglingsanfangsnahrung oder -folgenahrung Lipid, Protein und verdauliche Kohlenhydrate umfasst, wobei das Lipid in Form von Lipidkügelchen vorliegt, und
a. die Lipidkügelchen einen häufigsten Durchmesser, bezogen auf das Volumen, von mindestens 1 µm aufweisen, und/oder
b. mindestens 45 Vol.-% der Lipidkügelchen einen Durchmesser von 2 bis 12 µm aufweisen, und
c. das Lipid mindestens 0,5 Gew.-% Phospholipide, bezogen auf das Gesamtlipid, umfasst und die Lipidkügelchen eine Phospholipid umfassende Beschichtung aufweisen,
wobei der Zeitpunkt und das Ergebnis der Darmreifung bei dem Säugling dem Zeitpunkt und dem Ergebnis der Darmreifung, das bei mit menschlicher Milch gefütterten Säuglingen beobachtet wird, ähnlicher sind als der Zeitpunkt und das Ergebnis der Darmreifung bei einem Säugling, dem eine Kontroll-Säuglingsanfangsnahrung oder -folgenahrung verabreicht wurde, die Lipidkügelchen mit einem auf das Volumen bezogenen häufigsten Durchmesser von etwa 0,5 µm umfasst und die keine Beschichtung aus Phospholipiden aufweist.

2. Nicht-therapeutisches Verfahren nach Anspruch 1, wobei der Säugling, dem die Nährstoffzusammensetzung verabreicht wird, ein Alter von 0 bis 12 Monaten, vorzugsweise 0 bis 6 Monaten, besonders bevorzugt 0 bis 4 Monaten hat.

3. Nicht-therapeutisches Verfahren nach Anspruch 1 oder 2, wobei der Säugling ein termingeborener Säugling ist.

4. Nicht-therapeutisches Verfahren nach einem der voranstehenden Ansprüche, wobei die Modulation des Zeitpunkts und des Ergebnisses der Darmreifung die Modulation des Zeitpunkts und des Ergebnisses der Reifung des Darmimmunsystems einschließt.

5. Nicht-therapeutisches Verfahren nach Anspruch 4, wobei die Modulation des Zeitpunkts und des Ergebnisses der Reifung des Darmimmunsystems die Modulation der Expression von Genen einschließt, die an der Regulierung der epithelialen Barrierefunktion und der epithelialen Abwehr als Teil der Immunantwort des Darms beteiligt sind, die der von Säuglingen, die mit menschlicher Milch ernährt werden, ähnlicher ist.

6. Nicht-therapeutisches Verfahren nach einem der voranstehenden Ansprüche, wobei die Modulation des Zeitpunkts und des Ergebnisses der Darmreifung die Regulierung der Expression von Genen einschließt, die an der Immunentwicklung, der Immunfunktion, der Immunaktivierung und/oder der Immunsignalisierung beteiligt sind.

7. Nicht-therapeutisches Verfahren nach Anspruch 6, wobei es sich bei den an der Immunentwicklung, der Immunfunktion, der Immunaktivierung und/oder der Immunsignalisierung beteiligten Genen um relevante individuelle Gene und/oder Gene in signifikant unterschiedlich regulierten kanonischen Signalwegen handelt.

8. Nicht-therapeutisches Verfahren nach einem der voranstehenden Ansprüche, wobei das Lipid 0,5 Gew.-% bis 20 Gew.-% Phospholipide, bezogen auf das Gesamtlipid, umfasst.

9. Nicht-therapeutisches Verfahren nach einem der voranstehenden Ansprüche, wobei die Säuglingsanfangsnahrung oder -folgenahrung 0,25 bis 20 Gew.-% nichtverdauliche Oligosaccharide, bezogen auf das Trockengewicht der Nahrung, umfasst.

10. Nicht-therapeutisches Verfahren nach Anspruch 9, wobei die nicht-verdaulichen Oligosaccharide Galacto-Oligosaccharide und/oder Fructo-Oligosaccharide umfassen.

11. Nicht-therapeutisches Verfahren nach einem der voranstehenden Ansprüche, wobei die Säuglingsanfangsnahrung oder -folgenahrung ein Pulver ist, das geeignet ist, um mit Wasser rekonstituiert zu werden, um eine trinkfertige Nahrung bereitzustellen.

12. Nicht-therapeutisches Verfahren nach einem der voranstehenden Ansprüche, wobei das Lipid mindestens 0,15 Gew.-% Docosahexaensäure, bezogen auf die Gesamtfettsäuren, enthält.

13. Nicht-therapeutisches Verfahren nach einem der voranstehenden Ansprüche, wobei die Säuglingsanfangsnahrung oder -folgenahrung 1,2-5 g Protein/100 kcal, 3-7 Lipid/100 kcal, 6-18 verdauliche Kohlenhydrate/100 kcal umfasst.

## Revendications

1. Procédé non thérapeutique pour moduler le cadencement et le résultat de la maturation intestinale chez un nourrisson par administration d'une composition nutritionnelle choisie parmi une formule pour nourrisson et une formule de suite, dans lequel la formule pour nourrisson ou la formule de suite n'est pas du lait maternel, ladite formule pour nourrisson ou ladite formule de suite comprenant des lipides, des protéines et des hydrates de carbone digestibles, dans lequel le lipide se présente sous la forme de globules lipidiques, et
a. les globules lipidiques présentent un diamètre de mode basé sur le volume d'au moins 1 µm, et/ou
b. au moins 45 % en volume des globules lipidiques présentent un diamètre de 2 à 12 µm, et
c. le lipide comprend au moins 0,5 % en poids de phospholipides sur la base du lipide total et les globules lipidiques présentent un revêtement comprenant du phospholipide,
dans lequel le cadencement et le résultat de la maturation intestinale chez le nourrisson sont plus similaires au cadencement et au résultat de la maturation intestinale observés chez les nourrissons nourris au lait maternel par rapport au cadencement et au résultat de la maturation intestinale chez un nourrisson auquel a été administrée une formule pour nourrisson témoin ou une formule de suite comprenant des globules lipidiques avec un diamètre de mode basé sur le volume d'environ 0,5 µm et qui ne présentent pas de revêtement de phospholipides.

2. Procédé non thérapeutique selon la revendication 1, dans lequel le nourrisson qui reçoit la composition nutritionnelle est âgé de 0 à 12 mois, de préférence de 0 à 6 mois, de manière plus préférée de 0 à 4 mois.

3. Procédé non thérapeutique selon la revendication 1 ou 2, dans lequel le nourrisson est un nourrisson à terme.

4. Procédé non thérapeutique selon l'une quelconque des revendications précédentes, dans lequel la modulation du cadencement et du résultat de la maturation intestinale inclut une modulation du cadencement et du résultat de la maturation du système immunitaire intestinal.

5. Procédé non thérapeutique selon la revendication 4, dans lequel la modulation du cadencement et du résultat de la maturation du système immunitaire intestinal inclut une modulation de l'expression de gènes impliqués dans la régulation de la fonction de barrière épithéliale et de la défense épithéliale dans le cadre de la réponse immunitaire intestinale plus similaire aux nourrissons nourris au lait maternel.

6. Procédé non thérapeutique selon l'une quelconque des revendications précédentes, dans lequel la modulation du cadencement et du résultat de la maturation intestinale inclut une régulation de l'expression de gènes impliqués dans le développement immunitaire, la fonction immunitaire, l'activation immunitaire et/ou la signalisation immunitaire.

7. Procédé non thérapeutique selon la revendication 6, dans lequel les gènes impliqués dans le développement immunitaire, la fonction immunitaire, l'activation immunitaire et/ou la signalisation immunitaire sont des gènes individuels pertinents et / ou des gènes dans des voies canoniques régulées de manière significativement différente.

8. Procédé non thérapeutique selon l'une quelconque des revendications précédentes, dans lequel le lipide comprend 0,5 % en poids à 20 % en poids de phospholipides sur la base du lipide total.

9. Procédé non thérapeutique selon l'une quelconque des revendications précédentes, dans lequel la formule pour nourrisson ou la formule de suite comprend de 0,25 à 20 % en poids d'oligosaccharides non digestibles sur la base du poids sec de la formule.

10. Procédé non thérapeutique selon la revendication 9, dans lequel les oligosaccharides non digestibles comprennent des galacto-oligosaccharides et/ou des fructo-oligosaccharides.

11. Procédé non thérapeutique selon l'une quelconque des revendications précédentes, dans lequel la formule pour nourrisson ou la formule de suite est une poudre, appropriée pour se reconstituer avec de l'eau pour fournir une formule prête à boire.

12. Procédé non thérapeutique selon l'une quelconque des revendications précédentes, dans lequel le lipide comprend au moins 0,15 % en poids d'acide docosahexaénoïque sur la base des acides gras totaux.

13. Procédé non thérapeutique selon l'une quelconque des revendications précédentes, dans lequel la formule pour nourrisson ou la formule de suite comprend 1,2 à 5 g de protéines/100 kcal, 3 à 7 lipides/100 kcal, 6 à 18 hydrates de carbone digestibles/100 kcal.
